# EUROPÄISCHE PATENTSCHRIFT

(11) **EP 3 000 297 B1**
(45) Veröffentlichungstag und Bekanntmachung des Hinweises auf die Patenterteilung: **14.11.2018**
(21) Anmeldenummer: 15182097.4
(22) Anmeldetag: 24.08.2015
(51) Int. Cl.: A01B 67/00, A01B 71/00

(54) **ARBEITSGERÄT MIT AGGREGAT ZUR LEISTUNGSERZEUGUNG**
WORKING DEVICE WITH UNIT FOR POWER GENERATION
APPAREIL DE TRAVAIL AYANT UN GROUPE DE PRODUCTION D'ÉLECTRICITÉ

(30) Priorität: 19.09.2014 DE 102014113539
(43) Veröffentlichungstag der Anmeldung: 30.03.2016
(73) Patentinhaber: CLAAS Selbstfahrende Erntemaschinen GmbH, 33428 Harsewinkel (DE)
(72) Erfinder: Ellermann, Klaus Martin, 32791 Lage (DE)

(56) Entgegenhaltungen:
- EP-A1- 1 449 420
- EP-A1- 2 574 229
- GB-A- 965 437
- GB-A- 1 568 565
- US-A- 4 331 204
- US-A- 5 794 424
- US-A1- 2011 053 385
- US-A1- 2013 248 212

## Beschreibung

Die vorliegende Erfindung betrifft eine landwirtschaftliche Maschinenanordnung mit einer Zugmaschine und einem mit dieser verbundenen ersten Arbeitsgerät, wobei das erste Arbeitsgerät zum Antrieb mindestens eines Bodeneingriffsmittels ein Aggregat zur Leistungserzeugung aufweist.

In der Landwirtschaft werden zur effizienten Bewirtschaftung, insbesondere von großen Feldern zunehmend Arbeitsgeräte mit einer großen Arbeitsbreite verwendet, wobei Arbeitsbreiten von zwölf oder mehr Metern keine Seltenheit mehr sind. Durch die großen Arbeitsbreiten nehmen neben dem Gewicht der Arbeitsgeräte auch die für die Bearbeitung des Feldes mit dem Arbeitsgerät benötigten Zugkräfte zu, was sich besonders bei Arbeitsgeräten im Bodeneingriff bemerkbar macht, wie beispielsweise einem Pflug oder einer Drillmaschine. Bei Arbeitsgeräten wie einer Drillmaschine ist es zudem erforderlich, dass das in den Boden einzubringende Saatgut in einem Saatgutbehälter mitgeführt werden muss. Um eine möglichst unterbrechungsfreie Bearbeitung des Feldes zu gewährleisten, ist man bestrebt, die Arbeitsmaschinen möglichst selten mit Betriebsstoffen und Verbrauchsgütern nachfüllen zu müssen, beispielsweise dem Saatgut oder Dünger. Um eine möglichst große Menge an Verbrauchsgütern mitführen zu können, werden diese oft in separaten Transportanhängern mitgeführt, die in eine landwirtschaftlichen Maschinenanordnung aus einer Zugmaschine und einem Arbeitsgerät integriert werden. Die besonders in voll beladenem Zustand auftretenden hohen Gewichte der Transportanhänger machen zum Ziehen der Arbeitsgeräte leistungsstarke und schwere Zugmaschinen erforderlich, jedoch sind der Leistung und besonders dem Gewicht der Zugmaschinen sowie anderen landwirtschaftlichen Arbeitsmaschinen auf einem Feld Grenzen gesetzt.

Aus der EP 2 574 229 A1 ist eine landwirtschaftliche Arbeitsmaschine in Form einer selbstfahrende landwirtschaftliche Erntemaschine mit einem Fahrgestell bekannt, das sich auf im Bodeneingriff befindlichen Mitteln abstützt, mit denen die Erntemaschine in einer normalen Vorwärtsfahrtrichtung über ein Feld bewegbar ist, sowie einer Lenksteuereinrichtung, mit denen die im Bodeneingriff befindlichen Mittel lenkbar sind.

Weiterhin ist eine innerhalb des Fahrgestells angeordneten Erntegutbearbeitungseinrichtung und ein an der Vorderseite des Fahrgestells angeordneten Einzugsförderer offenbart, dem ein gegenüber dem Fahrgestell um eine vertikale Achse schwenkbar gelagerter Erntevorsatz zur Aufnahme von Erntegut vorgeordnet ist. Um der Erntemaschine auch bei schwierigen Bodenverhältnissen ein unproblematische Bewegung auf dem Feld zu ermöglichen, stützt sich der Erntevorsatz durch antreibbare und mittels eines fremdkraftbetätigten, mit der Lenksteuereinrichtung gekoppelten Aktors lenkbare Erntevorsatzbodeneingriffsmittel beispielsweise in Form von Rädern auf dem Boden ab. Durch die antreibbaren und lenkbaren Räder kann zwar die Bewegung auf dem Feld bei schwierigen Bodenverhältnissen, wie beispielsweise an einem Seitenhang oder bei einem durchweichten Boden, wie durch einen Allradantrieb verbessert werden, nachteilig ist jedoch, dass die landwirtschaftliche Arbeitsmaschine auch die für die angetriebenen Bodeneingriffsmittel benötigte Leistung bereitstellen muss.

Es ist daher die Aufgabe der Erfindung, eine landwirtschaftliche Maschinenanordnung bereitzustellen, welche eine verbesserte Nutzung der Leistung einer Zugmaschine und einer Reduzierung des Gewichtes der Zugmaschine ermöglicht

Die Aufgabe wird erfindungsgemäß durch die kennzeichnenden Merkmale des unabhängigen Patentanspruches 1 gelöst. Vorteilhafte Ausgestaltungen und Weiterbildungen der Erfindung ergeben sich aus den nachstehenden Unteransprüchen und den nachfolgenden Beschreibungen.

Eine landwirtschaftliche Maschinenanordnung mit einer Zugmaschine, welche eine Steuervorrichtung zur Steuerung und Regelung der Zugmaschine aufweist, und einem mit der Zugmaschine verbundenen ersten Arbeitsgerät, wobei das erste Arbeitsgerät Bodeneingriffsmittel aufweist, mit denen das erste Arbeitsgerät im Wesentlichen auf dem Boden abgestützt ist. Erfindungsgemäß weist das erste Arbeitsgerät ein Aggregat zur Leistungserzeugung auf, wobei mindestens ein Bodeneingriffsmittel des ersten Arbeitsgerätes durch das Aggregat antreibbar ist.

Dadurch, dass das erste Arbeitsgerät ein eigenes Aggregat, beispielsweise einen Verbrennungsmotor, zur Leistungserzeugung aufweist und mindestens ein Bodeneingriffsmittel des ersten Arbeitsgerätes durch das Aggregat antreibbar ist, kann das erste Arbeitsgerät eine unabhängig von der Zugmaschine erzeugte Leistung bereitstellen, welche in eine Zugkraft zum Bewegen des ersten Arbeitsgerätes umgesetzt werden kann. Die von dem ersten Arbeitsgerät bereitgestellt Leistung ist dabei zusätzlich zu der von der Zugmaschine bereitgestellten Leistung verfügbar, so dass insbesondere bei Bedarf, beispielsweise bei der Bearbeitung eines Feldes, die Leistung des ersten Arbeitsgerätes als Fahrantriebsunterstützung nutzbar ist.

Dies hat den Vorteil, dass insbesondere zum Bewegen schwerer Arbeitsgeräte auf einem Feld nicht nur die Leistung der Zugmaschine in Zugkraft umgesetzt werden kann, sondern zusätzlich auch die durch das Aggregat des Arbeitsgerätes erzeugte Leistung, wodurch die Zugmaschine, insbesondere während der Bearbeitung des Feldes, entlastet werden kann. Vorteilhaft ist hierbei, dass die Leistung der Zugmaschine im Feld im Wesentlichen für die eigentliche Bodenbearbeitung genutzt werden kann. So kann beispielsweise bei einer landwirtschaftlichen Maschinenanordnung mit einer Sämaschine und einem vollbeladenen Saatguttransportanhänger, die an die Zugmaschine angehängt sind, die Leistung der Zugmaschine im Wesentlichen zum Ziehen der Sämaschine genutzt werden, während der vollbeladene Saatguttransportanhänger als erstes Arbeitsgerät die Leistung zu seinem Fortbewegen selber generiert. Dies ermöglicht eine verbesserte, effizientere Nutzung der Leistung der Zugmaschine, wodurch bei unveränderten Arbeitsgeräten eine Zugmaschine mit geringerer Leistung und geringerem Gewicht eingesetzt werden kann. Alternativ kann eine unveränderte Zugmaschine ein größeres Arbeitsgerät, beispielsweise ein größere Drillmaschine, bewegen, wodurch die Arbeitsleistung der Maschinenanordnung vergrößert werden kann.

In einer vorteilhaften Ausgestaltung der Erfindung ist mindestens ein Bodeneingriffsmittel des ersten Arbeitsgerätes lenkbar ausgebildet, wodurch die Wendigkeit des ersten Arbeitsgerätes und der Maschinenkombination verbessert werden kann.

Vorteilhafterweise weist das Arbeitsgerät zum Antrieb mindestens eines Bodeneingriffsmittels einen Antriebsstrang, insbesondere mit einem regelbaren Getriebe, auf. Durch den Antriebsstrang können die Bodeneingriffsmittel unmittelbar angetrieben werden, wobei über das Getriebe eine Drehzahl der Bodeneingriffsmittel regelbar ist, so dass beispielsweise das Aggregat in einem effizienten Drehmomentbereich betreibbar ist. Besonders vorteilhaft ist es dabei, dass die Steuervorrichtung der Zugmaschine derart ausgebildet und eingerichtet, dass das Aggregat und/oder der Antriebsstrang des Arbeitsgerätes durch die Steuervorrichtung regelbar ist. Dadurch kann die Steuerung und Regelung des Aggregates und/oder des Antriebsstrangs in die Steuerung der Zugmaschine integriert und besser mit dieser koordiniert werden. Zudem kann die vorhandene Steuervorrichtung der Zugmaschine kostengünstig genutzt werden.

In einer besonders vorteilhaften Ausgestaltung der Erfindung weist das Aggregat einen elektrischen Generator und/oder eine Hydraulikpumpe zur Bereitstellung elektrischer und/oder hydraulischer Leistung auf. Die Bereitstellung elektrischer und/oder hydraulischer Leistung hat den Vorteil, dass die von dem Aggregat erzeugte Leistung flexibel und kostengünstig mittels elektrischer Leitungen und/oder Hydraulikleitungen entsprechenden Verbrauchern bereitgestellt werden kann. In einer besonders vorteilhaften Ausgestaltung der Erfindung ist ein mit der Zugmaschine und/oder dem ersten Arbeitsgerät verbundenes zweites Arbeitsgerät vorgesehen, welches durch das Aggregat mit Leistung versorgbar ist. Dies hat den Vorteil, dass das zweite Arbeitsgerät ebenfalls antreibbare Bodeneingriffsmittel aufweisen kann, wodurch besonders bei einem erhöhten Zugkraftbedarf die Zugmaschine weiter entlastet werden kann.

In einer weiteren, besonders vorteilhaften Ausgestaltung der Erfindung kann das erste und/oder zweite Arbeitsgerät jeweils mindestens eine Arbeitsvorrichtung aufweisen, welche durch das Aggregat antreibbar ist. Eine Arbeitsvorrichtung kann beispielsweise eine Saatgutfördervorrichtung mit einem durch das Aggregat antreibbaren Gebläse und/oder eine Dosiervorrichtung, beispielsweise eines Düngersteuers, sein. Dadurch, dass von einer Arbeitsvorrichtung benötigte Leistung durch das Aggregat des ersten Arbeitsgerätes erzeugt und bereitgestellt wird, kann die von der Zugmaschine bereitzustellende Leistung verringert werden, so dass diese beispielsweise für eine erhöhte Zugkraft genutzt werden kann. Arbeitsvorrichtungen des ersten und/oder zweiten Arbeitsgerätes können dabei mittels elektrischer Leitungen und/oder Druckschläuchen auf kostengünstige und flexible Weise mit entsprechender Leistung versorgt werden.

Vorteilhafterweise ist die Arbeitsvorrichtung durch die Steuervorrichtung der Zugmaschine regelbar ausgebildet. Dies hat den Vorteil, dass die Steuerung und Regelung der Arbeitsvorrichtung in die Steuerung der Zugmaschine integriert und besser mit dieser koordiniert werden kann.

In einer vorteilhaften Ausgestaltung der Erfindung ist das erste und/oder zweite Arbeitsgerät von einer Transportposition in eine Betriebsposition verbringbar, wobei in der Betriebsposition das mindestens eine Bodeneingriffsmittel durch das Aggregat antreibbar ist. In der Transportposition des ersten und/oder zweiten Arbeitsgerätes kann das mindestens eine Bodeneingriffsmittel antriebslos geschaltet sein, so dass keine Leistung von dem Aggregat auf ein Bodeneingriffsmittel übertragen werden kann. Dies kann beispielsweise mittels einer Kupplung erfolgen. Das Aggregat kann dadurch in der Transportposition abgeschaltet sein, oder zum Betrieb einer Arbeitsvorrichtung betreibbar sein, ohne die Fahreigenschaften des Arbeitsgerätes während des Transportes zu beeinflussen. In der Betriebsposition hingegen, bei der Bearbeitung des Feldes, kann die Leistung des Aggregates zum Antrieb mindestens eines Bodeneingriffsmittels genutzt werden, um so als Fahrantriebsunterstützung eine die Zugmaschine entlastende und/oder unterstützende Zugkraft für das Arbeitsgerät bereitzustellen.

Die Bodeneingriffsmittel sind dabei in Form von Rädern und/oder Raupen ausgebildet. Dies hat den Vorteil, dass die Bodeneingriffsmittel den Bodenverhältnissen und der auf den Boden zu übertragenden Zugkraft angepasst werden können.
Weitere Merkmale und Vorteile der Erfindung ergeben sich aus der nachfolgenden Beschreibung von Ausführungsbeispielen unter Bezugnahme auf die beigefügte Figur. Es zeigt:

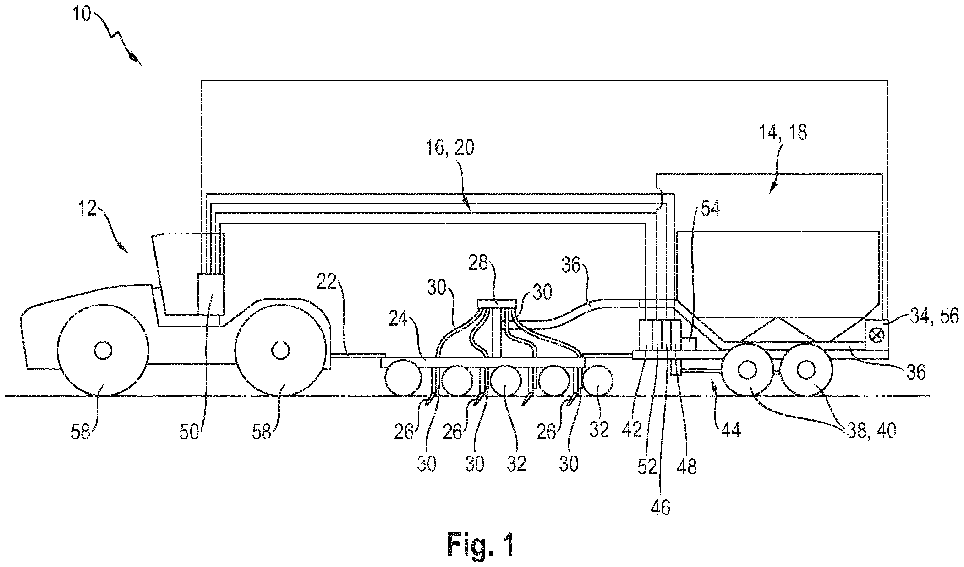

- Fig. 1:: eine schematische Seitenansicht einer landwirtschaftlichen Maschinenanordnung.

In Figur 1 ist als Beispiel für eine landwirtschaftliche Maschinenanordnung 10 eine Zugmaschine 12 in Form eines Traktors dargestellt, an den zur Bodenbearbeitung ein erstes Arbeitsgerät 14 und ein zweites Arbeitsgerät 16 angehängt sind. Das erste Arbeitsgerät 14 ist dabei in Form eines Saatguttransportanhängers 18 ausgebildet, welcher an das mit der Zugmaschine 12 verbundene zweite Arbeitsgerät 16 in Form einer pneumatischen Sämaschine 20 angehängt ist. Die landwirtschaftliche Maschinenanordnung 10 kann auch durch eine Zugmaschine 12 mit einem ersten Arbeitsgerät 14, beispielsweise in Form eines schweren Düngeranhängers oder Gülletanks gebildet werden. Es wird angenommen, dass dem Fachmann der Aufbau und die Funktionsweise einer landwirtschaftlichen Zugmaschine 12 sowie einer pneumatischen Sämaschine bekannt sind, so dass im Folgenden insbesondere auf die Zugmaschine 12 nicht detaillierter eingegangen wird. Die pneumatische Sämaschine 20 ist mit der Zugmaschine 12 mittels einer Deichsel 22 verbunden und wird von dieser sowohl in einer Transportposition, beispielsweise bei einem Straßentransport, als auch in einer Betriebsposition, bei der Saatausbringung auf einem Feld, gezogen. Die Zugmaschine 12 weist dabei zur Übertragung ihrer Zugkraft auf den Boden Bodeneingriffselemente 58 auf, welche in Form von Rädern ausgebildet sind. Die Sämaschine 20 weist eine Vielzahl von versetzt zueinander an einem Rahmen 24 angeordneten Säscharen 26 auf, welche in der Betriebsposition der Sämaschine 20 im Bodeneingriff sind und jeweils eine Furche in dem Boden zur Ablage von Saatgut öffnen. In Bearbeitungsrichtung ist hinter jeder Säschare 26 eine mit einem Verteilerkopf 28 verbundene Saatgutleitung 30 angeordnet, die Saatgut von dem Verteilerkopf 28 zu jeder Säschare 26 leitet, um eine Ablage des Saatgutes in der jeweiligen Furche zu ermöglichen. Jeder Säschare 26 folgt in Bearbeitungsrichtung eine Druckrolle 32, welche die Furche mit der eingebrachten Saat schließt. Über die vertikale Einstellung der Druckrollen 32 kann auch eine Eindringtiefe der Säscharen 26 in den Boden gesteuert werden. Abhängig von der Anzahl und der Eindringtiefe der Säscharen 26, der Bodenbeschaffenheit und der Breite der Sämaschine 20 wird eine bestimmte Zugkraft benötigt, um das Feld mit dieser Sämaschine 20 zu Bearbeiten, die beispielsweise bei unveränderter Bodenbeschaffenheit mit zunehmender Anzahl und Eindringtiefe der Säscharen 26 ansteigt.

Das Saatgut wird dem Verteilerkopf 28 pneumatisch mittels eines Gebläses 34 über eine Versorgungsleitung 36 zugeführt, welche mit dem Saatguttransportanhänger 18 verbunden ist. Das Gebläse 34 ist dabei auf dem ersten Arbeitsgerät 14, dem Saatguttransportanhänger 18 angeordnet, welcher an die Sämaschine 20, das zweite Arbeitsgerät 16, angehängt ist. Der Saatguttransportanhänger 18 weist an zwei Achsen angeordnete Bodeneingriffsmittel 38 in Form von Rädern 40 auf. Die Bodeneingriffsmittel 38 können insbesondere für eine vergrößerte Auflagefläche auch in Form von Raupen ausgebildet sein. Über die Bodeneingriffsmittel 38 ist im Wesentlichen das gesamte Gewicht des Saatguttransportanhängers 18 auf dem Boden abgestützt, wobei die zum Fortbewegen des Saatguttransportanhängers 18 benötigte Zugkraft von der Zugmaschine 12 bereitgestellt wird. Der Zugkraftbedarf für das erste Arbeitsgerät 14, den Saatguttransportanhänger 18, steigt mit zunehmenden Gewicht, besonders auf dem Feld, an, so dass zum Bewegen eines vollbeladenen Saatguttransportanhängers 18 ein hoher Zugkraftbedarf besteht, der zur Bearbeitung des Feldes eine entsprechend ballastierte, schwere Zugmaschine 12 mit hoher Leistung erforderlich macht.

Erfindungsgemäß weist das erste Arbeitsgerät 14 in Form des Saatguttransportanhängers 18 ein Aggregat 42 zur Leistungserzeugung auf, wobei zumindest eines der Bodeneingriffsmittel 38 durch das Aggregat 42 antreibbar ist. Das Aggregat 42, beispielsweise ein Verbrennungsmotor, ist auf dem ersten Arbeitsgerät 14 angeordnet und erzeugt unabhängig von der Zugmaschine 12 eine Leistung, die beispielsweise zum Antrieb des Saatguttransportanhängers 18 bereitgestellt werden kann. Dabei wird zumindest ein Teil der Leistung des Aggregates 42 auf ein Bodeneingriffsmittel 38, in Figur 1 in Form eines Rades 40 dargestellt, übertragen, wodurch eine die Zugmaschine 12 entlastende Fahrantriebsunterstützung durch das erste Arbeitsgerät 14 bereitgestellt wird. Die durch das erste Arbeitsgerät 14 bereitstellbare Zugkraft ist dabei unter anderem abhängig von der Leistung des Aggregates 42, den Bodenverhältnissen, sowie dem Gewicht des ersten Arbeitsgeräte 14, welches die über die Bodeneingriffsmittel 38 auf den Boden übertragbare Zugkraft beeinflusst. Daher ist der Einsatz der Leistung des Aggregates 42 zur Fahrantriebunterstützung besonders bei der Bearbeitung des Feldes hilfreich, wenn der Saatguttransportanhänger 18 voll beladen ist und/oder die Bodenverhältnisse, beispielsweise aufgrund einer starken Steigung, ungünstig sind. Die, insbesondere antreibbaren, Bodeneingriffsmittel 38 des ersten Arbeitsgerätes 14 können lenkbar ausgebildet sein, wodurch beispielsweise die Wendigkeit des ersten Arbeitsgerätes 14 und der Maschinenkombination 10 verbessert werden kann und/oder eine Seitenabdrift an einem Seitenhang kompensiert werden kann.

Zum Antrieb der Räder 40 weist der Saatguttransportanhänger 18 einen mit dem Aggregat 42 und den Rädern 40, den Bodeneingriffsmitteln 38, verbundenen Antriebsstrang 44 auf, wobei der Antriebsstrang 44 zum Verbinden mit dem Aggregat 42 eine schaltbare Kupplung 46 aufweist. Zudem weist der Antriebsstrang 44 ein Getriebe 48 auf, über das beispielsweise eine Drehzahl des Aggregates 42 an eine, einer benötigten Geschwindigkeit entsprechenden Drehzahl der Räder 40 angepasst werden kann.

Die Geschwindigkeit und/oder Fahrrichtung des ersten Arbeitsgerätes 14 können über die Drehzahl und/oder die Drehrichtung des Aggregates 42 und/oder über das Getriebe 48 geregelt werden. Zur Fahrantriebsunterstützung kann es besonders bei der Bearbeitung des Feldes ausreichend sein, dass das Getriebe 48 des ersten Arbeitsgeräts 14 in Form des Saatguttransportanhängers 18 eine einstufige Übersetzung aufweist, wobei die Geschwindigkeit über die Drehzahl des Aggregates 42 regelbar ist, da die bei der Bearbeitung des Feldes benötigte Geschwindigkeit gering ist und üblicherweise nur geringfügig variiert.

Die Zugmaschine 12 weist eine Steuervorrichtung 50 auf, welche neben der Steuerung und Regelung der Zugmaschine 12 auch das Aggregat 42 und/oder den Antriebsstrang 44 des ersten Arbeitsgerätes 14 steuert und regelt. Die Steuervorrichtung 50 ist dementsprechend mit dem Aggregat 42 und/oder dem Antriebsstrang 44 des Saatguttransportanhängers 18 verbunden, und kann beispielsweise neben der generierten Leistung des Aggregates 42, die Kupplung 46 sowie das Getriebe 48 steuern.

Während eines Transportes des ersten und/oder zweiten Arbeitsgerätes 14,16, beispielsweise während einer Straßenfahrt zu dem zu bearbeitenden Feld, können die Arbeitsgeräte 14, 16 in einer Transportposition angeordnet sein. Dies kann bei der Sämaschine 20 beispielsweise das An- oder Hochklappen eines Teils des Rahmens 24 sein. Zur Bearbeitung des Feldes werden die Arbeitsgeräte 14, 16 in eine Betriebsposition verbracht, beispielsweise durch Entfalten des Rahmens 24 mit den Säscharen 26 auf die volle Arbeitsbreite. Zudem kann in der Betriebsposition die Steuervorrichtung 50 das Aggregat 42 starten und durch Schließen der Kupplung 46 den Antrieb der Räder 40 als Fahrantriebsunterstützung starten, um die von der Zugmaschine 12 bereitzustellende Zugkraft um die auf die Räder 40 übertragene Leistung des Aggregates 42 zu verringern und somit die Zugmaschine 12 zu entlasten. Die Steuervorrichtung 50 kann automatisch, je nach benötigter Zugkraft, das Aggregat 42 und/oder den Antriebsstrang 44 steuern und regeln. In der Transportposition kann, insbesondere automatisch durch die Schaltvorrichtung, das Aggregat 14 durch die Kupplung 46 antriebslos geschaltet werden.

Die generierte Leistung des Aggregates 42 kann zusätzlich oder alternativ zu dem Antriebsstrang 44 in Form von elektrischer und/oder hydraulischer Leistung bereitgestellt werden, wofür das Aggregat 42 einen Generator 52 und/oder eine Hydraulikpumpe 54 aufweist. Mit der von dem Aggregat 42 generierte Leistung kann neben dem ersten Arbeitsgerät 14 auch ein weiteres, beispielsweise das zweite, Arbeitsgerät 26 versorgt werden. So kann beispielsweise von dem Saatguttransportanhänger 18 mit dem Aggregat 42 erzeugte elektrische und/oder hydraulische Leistung über elektrische Leitungen und/oder Hydraulikleitungen (nicht dargestellt) der Sämaschine 20 zur Verfügung gestellt werden. Mit der so bereitgestellten Leistung ist es möglich eine Arbeitsvorrichtung 56 eines Arbeitsgerätes 14, 16 zu betreiben, wie beispielsweise das Gebläse 34 zur Förderung des Saatgutes, oder eine Saatgut-Dosiervorrichtung (nicht dargestellt). Eine weitere Arbeitsvorrichtung 56 kann auch eine mechanische Saatgutfördervorrichtung (nicht dargestellt) sein. Die Arbeitsvorrichtungen 56 der Arbeitsgeräte 14,16 können dabei ebenfalls mit der Steuervorrichtung 50 verbunden und von dieser steuer- und regelbar sein.

### Bezugszeichenliste

- 10: landwirtschaftliche Maschinenanordnung
- 12: Zugmaschine
- 14: erstes Arbeitsgerät
- 16: zweites Arbeitsgerät
- 18: Saatguttransportanhänger
- 20: Sämaschine
- 22: Deichsel
- 24: Rahmen
- 26: Säschare
- 28: Verteilerkopf
- 30: Saatgutleitung
- 32: Druckrolle
- 34: Gebläse
- 36: Versorgungsleitung
- 38: Bodeneingriffsmittel
- 40: Rad
- 42: Aggregat
- 44: Antriebsstrang
- 46: Kupplung
- 48: Getriebe
- 50: Steuervorrichtung
- 52: Generator
- 54: Hydraulikpumpe
- 56: Arbeitsvorrichtung
- 58: Bodeneingriffselemente

## Patentansprüche

1. Landwirtschaftliche Maschinenanordnung mit einer Zugmaschine (12), welche eine Steuervorrichtung (50) zur Steuerung und Regelung der Zugmaschine (12) aufweist, und einem mit der Zugmaschine (12) verbundenen ersten Arbeitsgerät (14), wobei das erste Arbeitsgerät (14) Bodeneingriffsmittel (38) aufweist, mit denen das erste Arbeitsgerät (14) im Wesentlichen auf dem Boden abgestützt ist,
**dadurch gekennzeichnet, dass**
das erste Arbeitsgerät (14) ein Aggregat (42) zur Leistungserzeugung aufweist, wobei mindestens ein Bodeneingriffsmittel (38) des ersten Arbeitsgerätes (14) durch das Aggregat (42) antreibbar ist, und wobei die Bodeneingriffsmittel (38) Räder (40) und/oder Raupen sind.

2. Maschinenanordnung nach Anspruch 1, **dadurch gekennzeichnet, dass** mindestens ein Bodeneingriffsmittel (38) des ersten Arbeitsgerätes (14) lenkbar ausgebildet ist.

3. Maschinenanordnung nach Anspruch 1 oder 2, **dadurch gekennzeichnet, dass** das Arbeitsgerät (14,16) zum Antrieb mindestens eines Bodeneingriffsmittels (38) einen Antriebsstrang (44), insbesondere mit einem regelbaren Getriebe (48), aufweist.

4. Maschinenanordnung nach einem der vorherigen Ansprüche, **dadurch gekennzeichnet, dass** die Steuervorrichtung (50) der Zugmaschine (12) derart ausgebildet und eingerichtet ist, dass das Aggregat (42) und/oder der Antriebsstrang (44) des Arbeitsgerätes (14) durch die Steuervorrichtung (50) regelbar ist.

5. Maschinenanordnung nach einem der vorherigen Ansprüche, **dadurch gekennzeichnet, dass** das Aggregat (42) einen elektrischen Generator (52) und/oder eine Hydraulikpumpe (54) zur Bereitstellung elektrischer und/oder hydraulischer Leistung aufweist.

6. Maschinenanordnung nach einem der vorherigen Ansprüche, **dadurch gekennzeichnet, dass** ein mit der Zugmaschine (12) und/oder dem ersten Arbeitsgerät (14) verbundenes zweites Arbeitsgerät (16) vorgesehen ist, welches durch das Aggregat (42) mit Leistung versorgbar ist.

7. Maschinenanordnung nach einem der vorherigen Ansprüche, **dadurch gekennzeichnet, dass** das erste und/oder zweite Arbeitsgerät (14,16) eine Arbeitsvorrichtung (56) aufweist, welche durch das Aggregat (42) antreibbar ist.

8. Maschinenanordnung nach Anspruch 7, **dadurch gekennzeichnet, dass** die Arbeitsvorrichtung (56) durch die Steuervorrichtung (50) der Zugmaschine (12) regelbar ausgebildet ist.

9. Maschinenanordnung nach einem der vorherigen Ansprüche, **dadurch gekennzeichnet, dass** das Arbeitsgerät (14,16) von einer Transportposition in eine Betriebsposition verbringbar ist, wobei in der Betriebsposition das mindestens eine Bodeneingriffsmittel (38) durch das Aggregat (42) antreibbar ist.

## Claims

1. An agricultural machine arrangement comprising a tractor (12) having a control device (50) for open-loop and closed-loop control of the tractor (12), and a first working implement (14) connected to the tractor (12), wherein the first working implement (14) has ground engaging means (38), with which the first working implement (14) is substantially supported on the ground,
**characterised in that**
the first working implement (14) has an assembly (42) for power generation, wherein at least one ground engaging means (38) of the first working implement (14) is drivable by the assembly (42), and wherein the ground engaging means (38) are wheels (40) and/or tracks.

2. A machine arrangement according to claim 1 **characterised in that** at least one ground engaging means (38) of the first working implement (14) is steerable.

3. A machine arrangement according to claim 1 or claim 2 **characterised in that** the working implement (14, 16) has a drive train (44), in particular with a regulatable transmission (48), for driving at least one ground engaging means (38).

4. A machine arrangement according to one of the preceding claims **characterised in that** the control device (50) of the tractor (12) is so adapted and so designed that the assembly (42) and/or the drive train (44) of the working implement (14) is regulatable by the control device (50).

5. A machine arrangement according to one of the preceding claims **characterised in that** the assembly (42) has an electric generator (52) and/or a hydraulic pump (54) for providing electric and/or hydraulic power.

6. A machine arrangement according to one of the preceding claims **characterised in that** there is provided a second working implement (16) which is connected to the tractor (12) and/or the first working implement (14) and which can be supplied with power by the assembly (42).

7. A machine arrangement according to one of the preceding claims **characterised in that** the first and/or the second working implement (14, 16) has a working device (56) drivable by the assembly (42).

8. A machine arrangement according to claim 7 **characterised in that** the working device (56) is adapted to be regulatable by the control device (50) of the tractor (12).

9. A machine arrangement according to one of the preceding claims **characterised in that** the working implement (14, 16) can be moved from a transport position into an operative position, wherein in the operative position the at least one ground engaging means (38) is drivable by the assembly (42).

## Revendications

1. Agencement de machine agricole comprenant une machine de traction (12), laquelle comporte un dispositif de commande (50) pour commander et réguler la machine de traction (12), et un premier outil de travail (14) relié à la machine de traction (12), le premier outil de travail (14) comportant des moyens de prise au sol (38) avec lesquels le premier outil de travail (14) prend sensiblement appui sur le sol, **caractérisé en ce que** le premier outil de travail (14) comporte un organe (42) de production de puissance, au moins un moyen de prise au sol (38) du premier outil de travail (14) étant entraînable par l'intermédiaire de l'organe (42), les moyens de prise au sol (38) étant des roues (40) et/ou des chenilles.

2. Agencement de machine selon la revendication 1, **caractérisé en ce qu'**au moins un moyen de prise au sol (38) du premier outil de travail (14) est conçu de manière dirigeable.

3. Agencement de machine selon la revendication 1 ou 2, **caractérisé en ce que**, pour entraîner au moins un moyen de prise au sol (38), l'outil de travail (14, 16) comporte une chaîne de transmission (44), en particulier avec une transmission réglable (48).

4. Agencement de machine selon une des revendications précédentes, **caractérisé en ce que** le dispositif de commande (50) de la machine de traction (12) est conçu et agencé de façon que l'organe (42) et/ou la chaîne de transmission (44) de l'outil de travail (14) soient réglables par l'intermédiaire du dispositif de commande (50).

5. Agencement de machine selon une des revendications précédentes, **caractérisé en ce que** l'organe (42) comporte un générateur électrique (52) et/ou une pompe hydraulique (54) pour fournir une puissance électrique et/ou hydraulique.

6. Agencement de machine selon une des revendications précédentes, **caractérisé en ce qu'**un second outil de travail (16) relié à la machine de traction (12) et/ou au premier outil de travail (14) est prévu, lequel est alimentable en puissance par l'intermédiaire de l'organe (42).

7. Agencement de machine selon une des revendications précédentes, **caractérisé en ce que** le premier et/ou le second outil de travail (14, 16) comporte un dispositif de travail (56) qui est entraînable par l'intermédiaire de l'organe (42).

8. Agencement de machine selon la revendication 7, **caractérisé en ce que** le dispositif de travail (56) est conçu de manière réglable par l'intermédiaire du dispositif de commande (50) de la machine de traction (12).

9. Agencement de machine selon une des revendications précédentes, **caractérisé en ce que** l'outil de travail (14, 16) est transférable d'une position de transport vers une position de fonctionnement, dans la position de fonctionnement le au moins un moyen de prise au sol (38) étant entraînable par l'intermédiaire de l'organe (42).
